# EUROPEAN PATENT APPLICATION

(11) **EP 0 940 074 A1**
(43) Date of publication of application: **08.09.1999**
(21) Application number: 99200549.6
(22) Date of filing: 26.02.1999
(51) Int. Cl.: A01G 31/02

(54) **Plant installation with irrigation system**

(30) Priority: 05.03.1998 BE 9800173
(71) Applicant: N.V. BEKAERT S.A., 8550 Zwevegem (BE)
(72) Inventor: Canthier, Jean Pierre, 52100 Bettancourt-la-ferrée (FR)
(74) Representative: Demeester, Gabriel

(57) **Abstract**

The invention relates to a plant installation (1) with an accompanying irrigation system for the supply and drainage of water to and from plants or flowers (8) in the plant installation (1), whereby the plant installation (1) consists of a U-shaped wire frame (2) of welded longitudinal (3) and transverse (4) wire members into which a plate (5) with apertures (6) is inserted, the actual cultivation bed (7) with plants (8) resting on top of the plate (5), and that the irrigation system consists of at least one supply pipe (13) projecting horizontally above the cultivation bed (7) ; the supply pipe (13) has apertures (14) for an even, horizontal supply of water to the plants and a drainage gutter (15) running below the apertures (6) in the plate (5).

## Description

The present invention relates to a plant installation with an accompanying irrigation system for the supply and drainage of water to and from the plants or flowers in the plant installation.

Growing plants or flowers in forcing houses or greenhouses is a common method, the plants and flowers in their cultivation boxes being supplied with water and the necessary nutrients in the forcing houses or greenhouses, whereby the nutrients are usually added to the plants and flowers via the supply of water.

It is of essential importance to keep the supply and drainage of water to and from the plants in the plant installation under control in order possibly to be able to set up a circulation for the plant installation's irrigation system. It is of particular importance here to control the run-off of surplus water to procure an economic use of water and nutrients and to be able to clean the spent water in the correct manner before mixture with fresh water in the feed lines of the irrigation system.

It is an object of the present invention to provide a new type of plant installation with accompanying irrigation system for the supply and drainage of water, the plants or flowers being grown in large boxes of simple construction of durable, inexpensive materials.

It is another object of the present invention to provide a new type of plant installation with accompanying irrigation system whereby the use of water and plant nutrients can be efficiently controlled.

It is an object of the present invention also to provide a new type of plant installation with accompanying irrigation system whereby the water can be distributed evenly above the plants and whereby practically all the surplus water can run off at an even rate.

To obtain the abovementioned objects, the present invention proposes a plant installation with an accompanying irrigation system of the type mentioned in the introduction, the said plant installation consisting of a U-shaped wire frame of welded longitudinal and transverse wire members holding a plate with apertures, the actual cultivation bed with the plants resting on the plate and the irrigation system consisting of at least one supply pipe projecting horizontally above the cultivation bed for an even horizontal water supply to the plants, and a drainage gutter running below the apertures in the plate.

The bottom of the U-shaped wire frame preferably incorporates longitudinal channels to receive heating pipes.

In another alternative preferred embodiment of the U-shaped wire frame according to the present invention ; the bottom of the U-shaped wire frame is provided with a kink along its middle.

The present invention will be explained in more detail in the following description on the basis of the accompanying drawing. In the drawing :
- Fig. 1: shows in perspective a portion of the plant installation with a corresponding portion of the irrigation system ;
- Figs. 2, 3 and 4: show, in cross-section, variant wire frames for use in a plant installation according to the present invention.

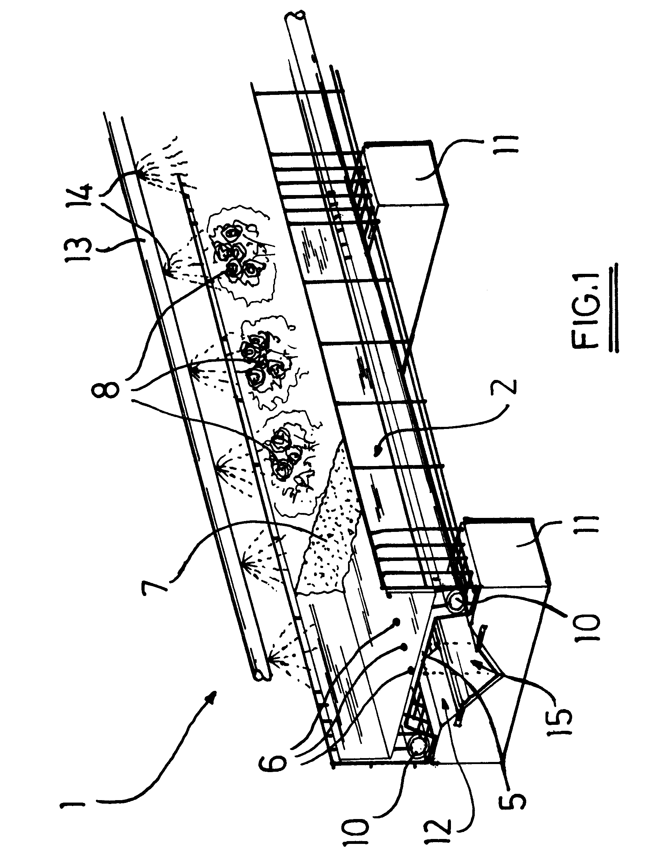

Fig. 1 shows, in perspective, a portion of the plant installation 1 with a corresponding section of the irrigation system according to the present invention. The plant installation 1 consists of a wire frame 2 made of longitudinal wires 3 and transverse wires 4 welded together. The wire frame 2 shows a substantially U-shaped cross-section or, in other words, the transverse wires 4 are bent nearly U-shaped. A solid plate 5 pierced with apertures 6 is placed inside the U-shaped wire frame 2. The plate 5 may be of plastic or of metal construction. The recommended colour of the plate 5 is black. The apertures 6 are made approximately in the middle of plate 5. The frame 2 and the plate 5 together form the effective cultivation box of the plant installation 1. The actual seed-bed 7. such as earth or other substrates, for the flowers or plants 8 is supported by the plate 5.

As shown in Fig. 1, it is also possible to fit the bottom or the body of the U-shaped wire frame 2 with longitudinal channels 9 to receive the heating pipes 10 for conveying hot water for the heating of the plants or flowers 8 in the plant installation 1.

The U-shaped wire frame 2 is supported at regular intervals by blocks 11 made of plastics, wood or other materials. The blocks 11 preferably have an almost V-shaped notch 12.

The irrigation system of the plant installation 1 shown in Fig. 1 includes a supply pipe 13 projecting horizontally above the cultivation bed 7 ; the pipe has apertures 14 for an even supply of water. The irrigation system further includes a drainage gutter 15 below the plate apertures 6. The drainage gutter 15 has a V-shaped cross-section and engages in the V-shaped notches 12 in the blocks 11. Fig. 1 shows that the water sent to the plant installation 1 is taken up by the plants 8 ; any surplus water is run off via the apertures 6 in the bottom of the cultivation box to the drainage gutter 15. This makes it possible to re-use the water running in drainage gutter 15, first cleaning it if necessary and adding the desired plant nutrients, and then returning the water to the supply pipe 13.

The U-shaped wire frame 2 in the installation 1 performs a number of important functions. As already mentioned, the wire frame 2 and the plate 5 together form the effective cultivation box 7 of the plant installation 1. The wire frame 2 together with the plate 5 with the apertures 6 ensure the desired drainage of any surplus water, or jointly form a drainage gutter. The wire frame 2, as already stated, preferably incorporates longitudinal channels 9 to receive the heating pipes 10, or the wire frame thus forms a suitable supporting structure for the heating pipes.

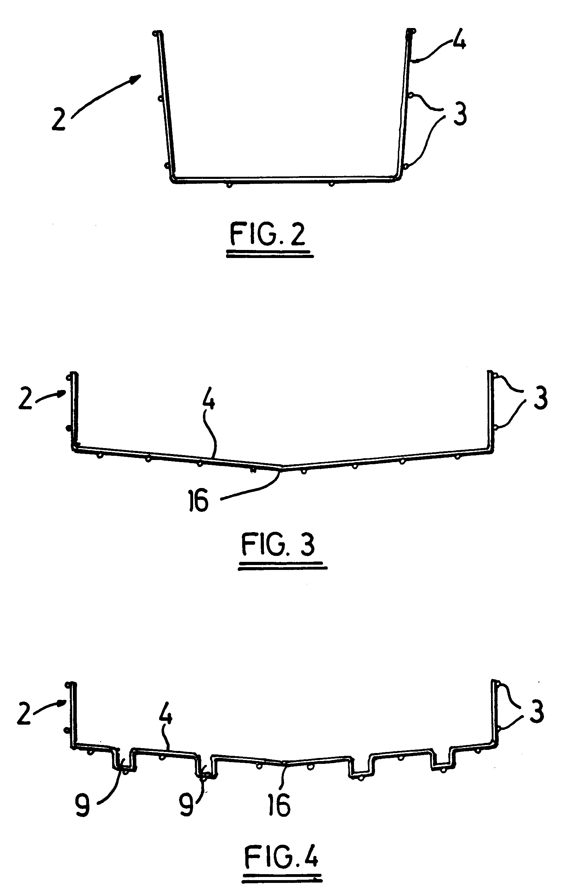

Fig. 2 shows a cross-sectional view of an alternative embodiment of the U-shaped wire frame 2. This wire frame 2 does not incorporate any longitudinal channels 9.

Fig. 3 shows, in cross-section, another alternative embodiment of the U-shaped wire frame 2 according to the present invention. The bottom or the middle section of the U-shaped wire frame 2 is made with a slight depression or kink 16 to improve its function as a drainage gutter.

Fig. 4 is a fairly similar representation of the embodiment in Fig. 3 of a U-shaped wire frame 2 according to the present invention. As in Fig. 1, the wire frame 2 again incorporates longitudinal channels 9 to accommodate the heating pipes 10.

## Claims

1. Plant installation (1) with an accompanying irrigation system for the supply and drainage of water to and from plants or flowers (8) in the plant installation (1), characterized in that the plant installation (1) consists of a U-shaped wire frame (2) of welded longitudinal (3) and transverse (4) wire members into which a plate (5) with apertures (6) is inserted, the actual cultivation bed (7) with plants (8) resting on top of the plate (5), and that the irrigation system consists of at least one supply pipe (13) projecting horizontally above the cultivation bed (7) ; the supply pipe (13) has apertures (14) for an even, horizontal supply of water to the plants and a drainage gutter (15) running below the apertures (6) in the plate (5).

2. Plant installation according to claim 1, characterized in that the bottom of the U-shaped wire frame (2) is provided with longitudinal channels (9) to receive heating pipes (10).

3. Plant installation according to claim 1 or claim 2, characterized in that the bottom of the U-shaped wire frame (2) is made with a slight depression or kink (16) along its middle.

4. U-shaped wire frame (2) according to any one or more of the foregoing claims 1 - 3, characterized in that the wire frame (2) is intended for use in a plant installation (1) according to any one or more of the foregoing claims 1 - 3.
